Europäisches Patentamt

European Patent Office

Office européen des brevets

(19)

(11) Veröffentlichungsnummer: **0 180 073 B1**

# EUROPÄISCHE PATENTSCHRIFT

(45) Veröffentlichungstag der Patentschrift: **31.07.91**

(21) Anmeldenummer: **85112779.5**

(22) Anmeldetag: **09.10.85**

(51) Int. Cl.5: **G06K 19/067**, G06K 1/02, G06K 7/06, E05B 47/00

(54) **Vorrichtung zur Datenerfassung und -speicherung.**

(30) Priorität: **27.10.84 DE 3439428**

(43) Veröffentlichungstag der Anmeldung:
**07.05.86 Patentblatt 86/19**

(45) Bekanntmachung des Hinweises auf die
Patenterteilung:
**31.07.91 Patentblatt 91/31**

(84) Benannte Vertragsstaaten:
**AT BE CH DE FR GB IT LI LU NL SE**

(56) Entgegenhaltungen:
**DE-A- 2 117 002**
**DE-A- 3 409 611**
**DE-B- 1 901 911**

(73) Patentinhaber: **Simon, Udo**
**Ziegelsteinstrasse 212**
**W-8500 Nürnberg 10(DE)**

Patentinhaber: **Hafner, Dieter, Dr.**
**Ostendstrasse 32**
**W-8500 Nürnberg 30(DE)**

(72) Erfinder: **Simon, Udo**
**Ziegelsteinstrasse 212**
**W-8500 Nürnberg 10(DE)**
Erfinder: **Hafner, Dieter, Dr.**
**Ostendstrasse 32**
**W-8500 Nürnberg 30(DE)**

(74) Vertreter: **Hafner, Dieter, Dr.rer.nat.,**
**Dipl.-Phys.**
**Ostendstrasse 132**
**W-8500 Nürnberg 30(DE)**

## Beschreibung

Die Erfindung betrifft ein System zur Datenerfassung und -speicherung.

Als Stand der Technik ist es bekannt, Datenoder Informationsträger in Form von Lochkarten, beispielsweise aus Papier- oder Kartonmaterial vorzusehen, die - einmal über eine Kartenstanze geführt - optisch oder mechanisch abgetastet werden und so den in Form von Löchern vorliegenden Programmgehalt an eine Datenverarbeitungsanlage übertragen können. Diese bekannten Datenträger erfordern bei der Stanzung ein hohes Maß an maschinellem Aufwand und Exaktheit, das Auslesen der Daten aus den bekannten Lochkarten durch optische Leseeinrichtungen ist relativ kompliziert und kann i. d. R. nur mit stationären Datenverarbeitungsanlagen vollzogen werden. Ein weiterer Nachteil der bekannten Lochkarten ist darin zu sehen, daß ein Laie i. d. R. nicht in der Lage ist, den in Form der Lochung bzw. Stanzung vorliegenden Programmgehalt der Karte ohne weiteres zu lesen.

Als weiterer Stand der Technik sind außerdem Papier-oder Pappkarten bekannt, auf die eine Information in Form von sog. Barcodes aufgebracht ist. Heute werden derartige Informationsträger bereits in Verbindung mit Registrierkassen und sog. Barcode-Lesern verwendet, um beispielsweise Artikelnummern und Preisinformation auf schnelle und einfache Weise vom Warenetikett abzulesen und zu registrieren. Die Abtastung der Bar- oder Strichcodes auf den Trägern erfolgt optisch, wobei entweder der Träger manuell über ein Abtastelement geführt wird oder ein an einer Handhabe angebrachtes Abtastelement manuell über den Strichcodestreifen gezogen wird, um die als Striche vorliegende Information in ein Hell-Dunkel-Signal und nachfolgend in ein binäres elektrisches Signal umzuwandeln. Derartige elektro-optisch arbeitende Barcode-Leser sind aufwendig und werden ebenfalls meist nur in stationären Anlagen verwendet.

Es ist weiterhin bekannt, Informationen oder Programme auf Magnetkarten abzuspeichern, die zu diesem Zweck einen Streifen magnetisierbaren Materials enthalten, der die Information trägt und durch einen Magnetkopf abgetastet werden kann. Auch bei derartigen Informationsträgern wird es als nachteilig empfunden, daß die hierzu notwendigen Vorrichtungen zum Auslesen der Information aufwendig und teuer sind und die enthaltene Information ohne die Auslese- oder Abtastvorrichtung überhaupt nicht erkannt werden kann.

Schließlich ist es noch bekannt, Information in sog. PROMS dadurch fest einzuspeichern, daß beim Programmiervorgang eine Mehrzahl von bestimmten Anschlußstiften der PROM-Chips bestromt wird, so daß im Inneren des PROMS Leiterbahnen durch Stromwärme durchtrennt werden und damit dem PROM ein fester, nicht veränderbarer Programmgehalt aufgeprägt wird. Ein derartiges Vorgehen ist nur dann lohnend, wenn die im PROM enthaltene Information über lange Zeit verwertet werden soll, da zum einen der Programmiervorgang, zum anderen der Aufwand an Material und Programmiergerät relativ hoch ist.

Aus der DE-B2-1 901 911 ist ein elektrisches Permutationsschloß zum Betätigen einer Verriegelungsvorrichtung einer Tür bekannt, wobei dieses Permutationsschloß aus einem Schlüssel mit einem Isolatorteil besteht, der eine Vielzahl von im Abstand voneinander angeordneten Leitern enthält, die entsprechend einem dem Permutationsschloß zugeordneten Schlüsselgeheimnis unterbrochen bzw. nicht unterbrochen sind. Ferner sind eine zur Aufnahme des Schlüssels dienende Schlüsselkanalhülse vorgesehen, die den Leitern des Schlüssels entsprechende Kontakte aufweist, und weiterhin eine mit den Kontakten in der Schlüsselkanalhülse in Verbindung stehende Decodierschaltung, durch die beim Einführen eines zum Permutationsschloß gehörenden Schlüssels in die Schlüsselkanalhülse die Verriegelungsvorrichtung entsperrbar ist. Insbesondere sind die Leiter des Schlüssels in Form von Leiterbahnen auf der Außenseite des in die Schlüsselkanalhülse einführbaren Isolatorteils angebracht, wobei zur Herstellung des dem Schlüssel zugeordneten Schlüsselgeheimnisses bestimmte Leiterbahnen unterbrochen, beispielsweise mit Hilfe eines durch Entladung eines Kondensators erzielten Stromstoßes durchgeschmolzen werden können. Schließlich ist der Schlüssel auf gegenüberliegenden Seiten mit einer isolierenden Deckschicht versehen, durch die die elektrischen Leiterbahnen im Bereich der jeweiligen Unterbrechung überdeckt werden, wodurch das Schlüsselgeheimnis des Schlüssels verdeckt wird und eine tragende Oberfläche geschaffen wird, wenn der Schlüssel in die zugehörige Aufnahmeöffnung, d. h. also in die zugehörige in die Schlüsselkanalhülse eingeführt wird. Nach dem Einstecken des Schlüssels in diese Aufnahmeöffnung werden die elektrischen Leiter des Schlüssels über die in der Aufnahmeöffnung vorgesehenen Kontakte mit den Eingängen der Decodierschaltung verbunden, wobei eine von einer Spannungsquelle herrührende Spannung nur an die Eingänge der Decodierschaltung gelangt, die nicht unterbrochenen elektrischen Leitern des Schlüssels zugeordnet sind. Somit werden also nach dem Einstecken des Schlüssels in die Aufnahmeöffnung die Eingänge der Decodierschaltung entsprechend des im Schlüssel vorgesehenen Schlüsselgeheimnisses erregt.

Darüber hinaus sind aus der DE-A 1 - 2 117 002 ein Verfahren und eine Vorrichtung zur Verschlüsselung eines auf einem Träger eine Anzahl elektrischer Strompfade aufweisenden Schlüssels bekannt, insbesondere für schlüsselbetätigte elektronische Sicherheitsanlagen oder dergleichen. Bei einem derartigen Schlüssel handelt es sich um eine codierte, elektrische Schlüsselkarte, die einen elektrisch isolierenden Träger aufweist, auf dem eine gedruckte Schaltung angeordnet ist, welche über einen gemeinsamen Leiter und eine Anzahl von Anschlußleitern verfügt, wobei die Anschlußleiter im uncodierten Zustand der Karte mittels durchschmelzbarer Verbindungsabschnitte verminderter Leitfähigkeit an den gemeinsamen Leitern angeschlossen sind. Wird bei einer solchen uncodierten oder leeren Schlüsselkarte ein elektrischer Strom ausreichender Stärke zwischen dem Ahschlußleiter des gemeinsamen Leiters und einem entsprechend ausgewählten weiteren Anschlußleiter zum Fließen gebracht, so wird der entsprechende durchschmelzbare Verbindungsabschnitt durchgeschmolzen und somit unterbrochen. Die spezielle Anordnung der offenen und geschlossenen Strompfade bestimmt den jeweiligen Code der Schlüsselkarte, entsprechend einer vorbestimmten, beispielsweise binären Codierung. Derartige elektrische Schlüsselkarten lassen sich in Verbindung mit elektronischen Sicherheitsanlagen verwenden, die auf eine solche Schlüsselkarte ansprechen und eine Decodierungsmatrix aufweisen, die feststellt, ob der Code bzw. die Strompfadanordnung einer eingesteckten Schlüsselkarte mit einem schaltungsgemäß vorgesehenen Code identisch ist. Sind die beiden miteinander verglichenen Codes identisch, so gibt die elektronische Sicherheitsanlage ein Betätigungssignal ab, durch das eine elektrische Türverriegelung oder eine andere Arbeitsvorrichtung betätigt wird. In dem Falle jedoch, daß eine Nichtübereinstimmung der verglichenen Codes festgestellt wird, findet keine Betätigung der Türverriegelung statt und außerdem wird ein Alarmsignal abgegeben. Zur Codierung dieser bekannten Schlüsselkarte dient ein gesondertes Codiergerät, welches eine verhältnismäßig komplizierte elektrische Schaltung aufweist.

Demgegenüber liegt der Erfindung die Aufgabe zugrunde, ein System zur Datenerfassung und -speicherung zu schaffen und dieses System in der Weise auszubilden, daß die gewünschte Information auch durch Laienhand in einen Informationsträger praktisch mühelos eingegeben werden kann, welcher in der Lage ist, unmittelbar, d. h. ohne Zwischenschaltung optischer oder magnetischer Elemente den auf einfache Weise gespeicherten Programmgehalt an ein mit ihm verbundenes datenverarbeitendes Gerät abzugeben. Wenn vorstehend von einem datenverarbeitenden Gerät gesprochen wird, so sollen davon nicht nur aufwendige Computeranlagen umfaßt sein, sondern auch relativ einfache elektronische programmgesteuerte Geräte, beispielsweise elektronische Wecker, Haushaltsgeräte, Bankautomaten, mit Programmträgern betätigbare Schlösser oder dergleichen mehr.

Die wie vorstehend definierte Aufgabe wird gemäß der Erfindung durch die Kombination der Merkmale des Anspruchs 1 gelöst.

Jeweils vorteilhafte Weiterbildungen der Erfindung ergeben sich aus den Unteransprüchen.

Als Kern der Erfindung wird es angesehen, den Programmträger als durch einen spitzen Gegenstand, z. B. Stift manuell perforierbare Karte vorzusehen, auf der elektrische Leiterbahnen aufgebracht sind, die über die zur Perforation vorgesehenen markierten Bereiche laufen und nach Wunsch vom "Programmierer" durchtrennt werden können. Die Enden der Leiterbahnen sind zu einem der Randbereiche der Karte geführt und wirken mit einer speziell ausgebildeten Abtastvorrichtung zusammen, die eine Mehrzahl von räumlich auf die Leiterbahnen der Karte abgestimmten Abtastkontakten aufweist, die in einer Ausnehmung zur räumlich definierten Einführung der Karte angeordnet sind. Die Ausnahme kann beispielsweise als schlitzartig ausgebildete Klemmhalterung für die Karte ausgebildet sein, wenn die Karte über einen längeren Zeitabschnitt als "Festprogrammträger" dienen soll, es liegt aber auch im Rahmen der Erfindung, die mit den elektrischen Leiterbahnen - teilweise durchtrennt - versehene Karte nur kurzzeitig über eine Kontaktanordnung laufen zu lassen, die dann den in Form einer "elektrischen Lochung" vorliegenden Programmgehalt der Karte ausliest und in die nachgeschalteten elektronischen Elemente, beispielsweise einen Speicher oder Prozessor eingibt.

Mit dem erfindungsgemäßen Programmträger ist nicht nur ein äußerst billiger Programmträger geschaffen, da die Leiterbahnen auf eine Pappkarte ohne weiteres im Billigverfahren aufgebracht werden können, bestechend erscheint auch die unmittelbare Übermittlung der im Programmträger enthalten Information ohne Zwischenschaltung von komplizierten optischen Elementen oder anfälligen Magnetköpfen, wodurch die Möglichkeit eröffnet wird, den Programmträger auch in Verbindung mit sog. Taschengeräten, beispielsweise Taschenweckern u. dgl. zu verwenden. So ist es beispielsweise möglich, den Träger mit einem kleinen uhrähnlichen Alarmsignalgeber in Verbindung zu bringen, der dann beispielsweise alle 3 Stunden an die Einnahme eines Arzneimittels erinnern soll. Der Träger kann beispielsweise vom Apotheker einmal programmiert und an den Alarmsignalgeber angesteckt werden, wodurch der Benutzer in genauen, regelmäßigen Abständen an die Einnahme des Arzneimittels erinnert wird, was insbesondere für Antibiotika von hoher therapeutischer Bedeutung ist.

Besonders vorteilhaft erscheint auch die Möglichkeit, neben dem Arrangement durchtrennbarer Leiterbahnen weitere lesbare Information auf den für einen bestimmten Verwendungszweck vorgesehenen Programmträger aufzudrucken, so daß sowohl der Programmierende als auch der Benutzer des mit der Uhr versehenen Programmträgers sofort in der Lage ist, die abgespeicherte Information auszulesen, beispielsweise einen Termin oder eine Weckzeit. Vorteilhafterweise werden sämtliche Leiterbahnen über je eine perforierbare Stelle der Karte geführt, wirken mit einem Ende mit den Kontakten der Abtastvorrichtung zusammen und sind mit ihrem anderen Ende mit einer gemeinsamen Sammelleitung verbunden, deren Ende ebenfalls mit einem Abtastkontakt der Abtastvorrichtung zusammenwirkt. Es sind aber auch andere Arten der Leiterbahnführung denkbar. So ist es z. B. möglich, auf der Vorder- und Rückseite des Trägers jeweils eine Leiterbahnanordnung vorzusehen, wobei jeweils eine Leiterbahn auf Vorder- und Rückseite des Trägers über eine perforierbare Stelle desselben geführt sind.

Es ist auch möglich, den durchtrennbaren Bereichen des Informationsträgers in an sich bekannter Weise unterschiedliche Wertigkeit zuzuordnen, beispielsweise die Wertigkeiten 8 - 4 - 2 - 1 eines entsprechend benannten Codes, wodurch durch Perforation von nur vier Leitungen 16 unterschiedliche Informationen direkt an die nachgeschaltete Elektronik abgegeben werden können. Die Verwendung weiterer bekannter Codes ist ebenfalls denkbar.

Es wurde bereits vorstehend betont, daß der erfindungsgemäße Programmträger an datenverarbeitenden Geräten unterschiedlichster Art verwendet werden kann.

Besonders vorteilhaft erscheint die Verwendung in Verbindung mit elektronischen Weckern, wobei dann zweckmäßigerweise der Programmträger dauerhaft in einer Karten-Ausnehmung des Weckergehäuses festklemmbar ist und mit seinem perforiertem Bereich sichtbar aus dem Weckergehäuse heraussteht. Vorteilhafterweise sind die perforierbaren Bereiche auf dem Informationsträger kreisförmig angeordnet und entsprechend in ihrer Anordnung den vollen Stunden 1 - 12 auf einem Uhren-Zifferblatt, es ist aber auch ohne weiteres möglich, neben beispielsweise 12 den vollen Stunden entsprechenden perforierbaren Bereichen, weitere Zwischenbereiche im Rahmen der kreisförmigen Anordnung vorzusehen, die beispielsweise einem Viertelstunden-Abstand entsprechen. Weiterhin ist es möglich, im Rahmen der kreisförmigen Bereichsanordnung nur volle Stunden vorzusehen und 15-Minuten-Zwischenabstände bzw. eine PM/AM- (Vormittags-/Nachmittags-) Information als gesonderte, außerhalb der kreisförmigen Anordnung vorgesehene durchtrennbare Bereiche anzuordnen.

Vorteilhafterweise ist das Material des Datenträgers innerhalb der zur Durchtrennung vorgesehenen Lochbereiche gegenüber der die Bereiche umgebenden Materialstärke verdünnt ausgebildet, um zu vermeiden, daß beim Durchtrennen eines Bereiches die Karte zu weit einreißt und ggfs. benachbart liegende Leiterbahnabschnitt unbeabsichtigt verletzt werden. Es ist auch möglich, die Bereiche mit einer Randperforation o. dgl. zu umgeben.

Besonders vorteilhaft erscheint die Verwendung des Programmträgers mit dem zugehörigen Alarmgeber in Anwendungsgebieten, wo beispielsweise Jahreszyklen oder Verfallszeiten überwacht werden müssen. Man denke beispielsweise an die Überwachung von technischen Untersuchungszyklen an Kraftfahrzeugen, wo der TÜV-Beamte einen mit Monats- und Jahreslochungen versehenen erfindungsgemäßen Programmträger auf einfache und übersichtliche Weise programmieren und als Festprogrammträger in einen mit der Autoelektrik zusammenwirkenden Alarmgeber einstecken kann, der beispielsweise im Elektrik-Schaltkasten oder Bereich des Armaturenbrettes des Fahrzeuges vorgesehen ist. Die Monatslochungen können wiederum kreisförmig angeordnet sein, zusätzliche Jahreslochungen dagegen gesondert.

Ein entsprechender Programmträger kann weiterhin besonders vorteilhaft zur Gefriergutüberwachung eingesetzt werden, wobei dann an Gefriergutcontainern ein elektronischer Alarmgeber anzuordnen ist, der über den erfindungsgemäßen Programmträger gesteuert wird. Auch hier erscheint die Möglichkeit der Einfachprogrammierung durch fachlich nicht geschultes Personal sowie die Einfachheit und Preisgünstigkeit des Programmträgers bestechend. Weiterhin wirkt sich bei der Gefriergutüberwachung durch einen elektronischen Alarmgeber als besonders vorteilhaft aus, daß dieser als elektronisches Gerät umso schneller läuft, je höher die Temperatur des Containers ist.

Der Alarmgeber kann in an sich bekannter Weise mit einem optischen oder akustischen Signalgeber und/oder mit einem elektronischen Display versehen sein, das die bis zur Alarmgabe verbleibende Restzeit (in Stunden, Tagen, Jahren o. dgl.) anzeigt.

Besonders vorteilhaft kann der erfindungsgemäße Informationsträger ferner im Zusammenhang mit elektronisch betätigbaren Schließanlagen verwendet werden. So hat beispielsweise der Portier eines Unternehmens die Möglichkeit, den erfindungsgemäßen, einfach zu programmierenden Informationsträger einem Besucher an die Hand zu geben, der damit Zugang ausschließlich zu ganz bestimmten, durch elektronische Schließanlagen überwachte Gebäude- oder Laborbereiche erhält. In diesem Zusammenhang erscheint auch die Billigkeit des Programmträgers von besonderer Bedeutung.

Vorteilhaft erscheint weiterhin die Verwendung des Informationsträgers zur Steuerung von Zeitzündern an Sprengsätzen aller Art, wobei Programmierfehler bei der Programmierung des Zündzeitpunktes durch die Einfachheit des Programmiervorganges und des Programmträgers wirkungsvoll verhindert werben können.

Schließlich kann der erfindungsgemäße Programmträger vorteilhaft im Lagerhaltungs- und Transportwesen eingesetzt werden, wobei dann allerdings keine zeitliche Alarminformation eingeprägt wird, sondern beispielsweise Versandziele von Gepäckstücken oder Containern. Das mit dem Programmträger zusammenwirkende Gerät zeigt dann beispielsweise durch ein Display oder eine Leuchtdiodenanordnung an, wo das so gekennzeichnete Versandgut hingeschickt werden soll oder wirkt mit peripheren elektronischen Elementen zur Steuerung von Förderbändern u. dgl. zusammen.

Die Erfindung ist anhand einiger Ausführungsbeispiele in den Zeichnungsfiguren näher erläutert. Es zeigen:

Fig. 1    einen elektronischen Alarmgeber mit angestecktem Informationsträger,

Fig. 2    einen 24-Stunden-Programmträger mit 15 Minutenteilung,

Fig. 3    einen 3-Jahres-Programmträger mit Monatsteilung,

Fig. 4    einen Programmträger zur Programmierung von beispielsweise 60 Versandzielen,

Fig. 5    einen Programmierstempel.

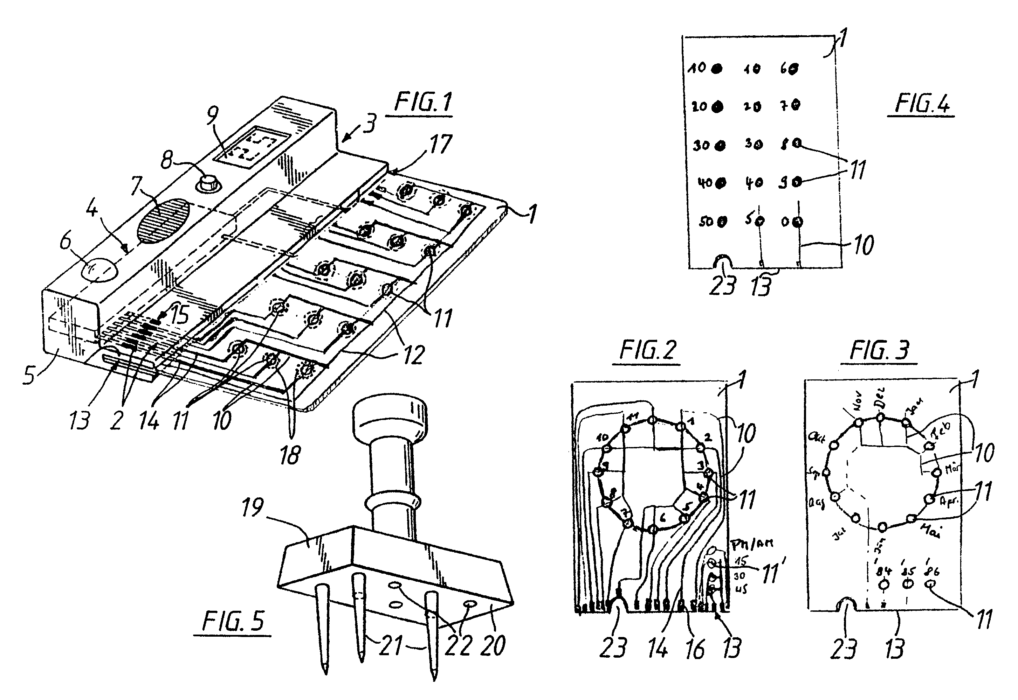

Die Vorrichtung zur Datenerfassung und Speicherung besteht i. w. aus einem Informationsträger 1 sowie einer damit zusammenwirkenden Abtastvorrichtung 2, die Bestandteil eines datenverarbeitenden Gerätes 3 ist oder mit einem solchen elektrisch verbunden ist. Das Gerät weist beispielsweise einen Datenspeicher, -vergleicher, -zähler u. dgl. auf, in Fig. 1 sind derartige elektronische Baugruppen schematisch als Chip 4 angedeutet, der innerhalb des Gerätegehäuses 5 angeordnet ist. Das Gerät soll ein zeitlich gesteuertes Alarmsignal abgeben können oder weitere nicht näher dargestellte Geräte ansteuern können. Zur Alarmgabe ist das Gerät 3 mit einer Leuchtdiode 6 und einem akustischen Signalgeber, nämlich einem kleinen Lautsprecher 7 versehen, der nach Ablauf der einprogrammierten Zeit ein Signal abgibt.

Weiterhin finden sich an dem Gerätegehäuse 5 noch eine Taste 8 zur Nullsetzung des Zählerbausteins sowie ein Display 9 zur Anzeige unterschiedlicher Speicherinhalte, beispielsweise der laufenden Zeit oder der bis zur Alarmgabe verbleibenden Restzeit. Das Display 9 kann auch als alphanumerisches Display ausgebildet sein und beispielsweise Zielorte darstellen, wenn die Vorrichtung in Verbindung mit Versandcontainern verwendet wird.

Der Informationsträger 1 ist eine Karte aus Papier oder papierähnlichem Material und trägt auf einer seiner Oberflächen eine Mehrzahl von durchtrennbaren Leiterbahnen 10, die über markierte Bereiche 11 geführt sind, welch letztere mittels eines Stiftes o. dgl. perforiert werden können, so daß die Leiterbahnen unterbrochen werden. Die Leiterbahnen sind an ihrem einen Ende über eine gemeinsame Sammelleitung 12 verbunden, mit ihrem anderen Ende 14 sind sie zu einem Randabschnitt 13 des Informationsträgers 1 geführt und wirken mit der Abtastvorrichtung 2 zusammen, die i. w. aus einer Mehrzahl von Abtastkontakten 15 besteht, die die vorteilhafterweise verbreitert ausgebildeten Endabschnitte 16 beaufschlagen und in einer schlitzartigen Aufnahme 17 zur räumlich definierten Einführung oder Halterung des Randabschnittes 13 der Karte angeordnet sind.

Soll der Informationsträger über längere Fristen in der Aufnahme 17 verbleiben, so kann innerhalb der schlitzartigen Aufnahme eine Klemmhalterung für den Informationsträger vorgesehen sein.

Die Leiterbahnen 10 sowie die Sammelleitung 12 sind auf den Informationsträger 1 (Karte) aufgedampft, aufgedruckt, aufgespritzt oder aufgeklebt oder in sonstiger Weise aufgebracht. Wesentlich ist, daß die Leiterbahnen zusammen mit dem papier- oder kartonähnlichen Träger problemlos durchtrennbar sind.

Um zu vermeiden, daß der Informaticnsträger bei der Perforation der Bereiche 11 über diese hinaus aufreißt und ggf. benachbart liegende weitere Leiterbahnen unbeabsichtigt durchtrennt werden, ist das Kartenmaterial im Perforationsbereich dünner als in daneben liegenden Bereichen ausgebildet, ebenso ist es aber möglich, die Bereiche 11 mit einer Randperforation oder Vorstanzung 18 zu versehen, wobei dann auch die über die Randperforation laufenden Stellen der Leiterbahnen mit Sollbruchstellen versehen sein können.

Sollen kompliziertere "Programme" auf die Karte aufgeprägt werden, wozu eine Mehrzahl von Löchern gestanzt werden muß, so empfiehlt sich die Verwendung eines Programmierstempels 19, der in Figur 5 dargestellt ist. Dieser ist auf seiner Unterseite 20 mit einer Mehrzahl von Perforationsstiften 21 versehen, deren Anzahl und Anordnung auf die Anordnung der perforierbaren Bereiche 11 auf dem Informationsträger 1 abgestimmt ist und einen bestimmten Programminhalt (beispielsweise eine bestimmte Weckzeit oder kompliziertere Alarmgabezyklen) widerspiegelt.

Um den Programmierstempel 19 sich wechselnden Anforderungen anpassen zu können, sind die Perforationsstifte 21 wahlweise in Ausnehmungen 22 der Unterseite 20 einsetzbar.

Soll die Vorrichtung an einer elektronischen Weckuhr verwendet werden, so empfiehlt es sich, die bestimmten Zeitintervallen, beispielsweise vollen Stunden entsprechenden perforierbaren Bereiche 11 kreisförmig auf dem Informationsträger anzuordnen, beispielsweise nach Art eines Zifferblattes, wodurch mit einem Blick auf den Informationsträger deutlich wird, welche Weckzeit einprogrammiert ist. Vorzugsweise sind neben den kreisförmig angeordneten Bereichen 11 weitere perforierbare Bereiche 11' vorgesehen, mit denen eine feinere Unterteilung der Alarmzeit beispielsweise in Viertelstunden möglich ist und außerdem eine Vorwahl getroffen werden kann, ob die Alarmgabe vormittags oder nachmittags (AM/PM) erfolgen soll.

Weitere mögliche Anordnungen der perforierbaren Bereiche sind in Fig. 3 und 4 dargestellt, wobei in diesen Figuren die Leiterbahnen aus Übersichtlichkeitsgründen nicht eingezeichnet sind. Figur 3 zeigt einen Informationsträger, bei dem die perforierbaren Bereiche 11 wie bei dem in Fig. 2 dargestellten Ausführungsbeispiel kreisförmig angeordnet sind und jeweils einem Monat entsprechen. Weitere, nicht auf der Kreisbahn angeordnete Bereiche 11' sind einer Abfolge von 3 Jahren zugeordnet. Um nun beispielsweise einen Termin im Oktober 1986 einzuprogrammieren, wie dies beispielsweise zur Erinnerung an einen technischen Überwachungstermin an Kraftfahrzeugen der Fall sein kann, müssen lediglich die Bereiche "Oktober" und "1986" durchbohrt werden und die Karte in die Ausnehmung des Gerätegehäuses eingeführt werden. Um ein fehlerhaftes Einführen zu vermeiden, kann der Randabschnitt 13 mit einer Einkerbung 23 versehen sein, die mit einer nicht dargestellten Nase innerhalb des Schlitzes der Abtastvorrichtung 2 zusammenwirkt und ein verkehrtes Einstecken der Karte verhindert.

Das in Fig. 4 dargestellte Ausführungsbeispiel ermöglicht auf einfache Weise das Programmieren von 60 unterschiedlichen Zielen, beispielsweise Versandzielen. Soll beispielsweise das Versandziel 38 einprogrammiert werden, so sind die perforierbaren Bereiche "30" und "8" zu durchtrennen.

## Positionszahlenliste

| | |
|---|---|
| 1 | Informationsträger |
| 2 | Abtastvorrichtung |
| 3 | Gerät |
| 4 | Chips |
| 5 | Gerätegehäuse |
| 6 | Leuchtdiode |
| 7 | Lautsprecher |
| 8 | Taste |
| 9 | Display |
| 10 | Leiterbahnen |
| 11 | Bereiche |
| 12 | Sammelleitung |
| 13 | Randabschnitt |
| 14 | Ende |
| 15 | Abtastkontakte |
| 16 | Endabschnitt |
| 17 | Aufnahme |
| 18 | Vorstanzung |
| 19 | Programmierstempel |
| 20 | Unterseite |
| 21 | Perforationsstifte |
| 22 | Ausnehmungen |
| 23 | Einkerbung |

## Patentansprüche

1. System zur Datenerfassung und -speicherung, bestehend aus einem Informationsträger (1), der als perforierbare Karte ausgebildet ist, und einem datenverarbeitenden Gerät (3) mit Abtastvorrichtung (2) zum Einlesen der auf der Karte durch die Perforation aufgebrachten Daten in das datenverarbeitende Gerät zur Abgabe eines zeitlich gesteuerten Alarmsignals und/oder zur Steuerung von dem Gerät nachgeschalteten weiteren Geräten,

   **gekennzeichnet durch folgende Merkmale:**

   - auf dem Informationsträger (1) ist eine Mehrzahl von durchtrennbaren Leiterbahnen (10) angeordnet, die
     -- über zur Perforation des Informationsträgers (1) und damit Durchtrennung des Leiterbahnen (10) vorgesehene, vorzugsweise markierte Bereiche (11, 11') des Informationsträgers (1) verlaufen und
     -- zu einem Randabschnitt (13) des Informationsträgers (1) geführt sind,
   - die Abtastvorrichtung (2) besteht aus einer Mehrzahl von Abtastkontakten (15) zur Beaufschlagung der Endabschnitte der Leiterbahnen (10) des Informationsträgers (1) die in einer Aufnahme (17) zur räumlich definierten Einführung oder Halterung des Randabschnittes (13) des Informationträgers (1) angeordnet sind.

2. System nach Anspruch 1,

   dadurch gekennzeichnet,

   daß der Informationsträger (1) in der als Steckschlitz ausgebildeten Aufnahme (17) unter Klemmsitz gehalten ist.

3. System nach Anspruch 1 oder 2,

dadurch gekennzeichnet,

daß die Leiterbahnen (10) auf den Informationsträgern (1) aufgedampft, aufgedruckt, aufgespritzt oder aufgeklebt sind.

4. System nach einem der vorhergehenden Ansprüche,

dadurch gekennzeichnet,

daß das Informationsträgermaterial Papier oder Karton ist.

5. System nach einem der vorhergehenden Ansprüche,

dadurch gekennzeichnet,

daß die Materialstärke der zur Perforation vorgesehenen durchtrennbaren Bereiche (11, 11') gegenüber der die Bereiche (11, 11') umgebenden durchschnittlichen Materialstärke des Informationsträgers (1) verdünnt ausgebildet ist.

6. System nach einem der vorhergehenden Ansprüche,

dadurch gekennzeichnet,

daß die zur Perforation vorgesehenen Bereiche (11, 11') mit einer Randperforation oder Vorstanzung (18) versehen sind.

7. System nach einem der vorhergehenden Ansprüche,

dadurch gekennzeichnet,

daß zur gleichzeitigen Perforation einer Mehrzahl von perforierbaren Bereichen (11, 11') ein Programmierstempel (19) vorgesehen ist, der auf seiner Unterseite (20) eine Mehrzahl von Perforationsstiften (21) trägt, deren Anzahl und Anordnung auf die Anordnung der perforierbaren Bereiche (11, 11a) auf dem Informationsträger abgestimmt ist, bzw. einen bestimmten Programminhalt widerspiegelt.

8. System nach Anspruch 7,

dadurch gekennzeichnet,

daß die Perforationsstifte in Ausnehmungen (22) des Programmierstempels (19) einsetzbar sind.

9. System nach einem der vorhergehenden Ansprüche,

dadurch gekennzeichnet,

daß der Programmträger (1) dauerhaft in einer entsprechenden Ausnehmung eines Gehäuses einer elektronischen Weckuhr festklemmbar ist und mit seinem perforierten Bereich sichtbar aus dem Gehäuse heraussteht.

10. System nach einem der vorhergehenden Ansprüche,

dadurch gekennzeichnet,

daß die bestimmten Zeitintervallen entsprechenden perforierbaren Bereiche (11) kreisförmig nach Art eines Zifferblattes auf dem Informationsträger (1) angeordnet sind.

11. System nach Anspruch 10,

dadurch gekennzeichnet,

daß daß neben den kreisförmig angeordneten Bereichen (11) weitere perforierbare Bereiche (11') vorgesehen sind, die Zwischenintervallen oder längerfristigen Zeitintervallen (bezogen auf die Zeitintervalle der kreisförmigen Bereiche (11)) entsprechen.

12. System nach einem der Ansprüche 1 - 8,

dadurch gekennzeichnet,

daß zur Gefriergutüberwachung mittels des Informationsträgers (1) ein elektronischer Alarmgeber steuerbar ist, der an einem Gefriergutbehälter angeordnet ist.

13. Verwendung des Systems nach einem der Ansprüche 1 - 8 bei elektronisch betätigbaren Schließanlagen,

dadurch gekennzeichnet,

daß der Informationsträger (1) als Schlüsselkarte für elektronische Türschlösser ausgebildet ist.

14. Verwendung des Systems nach einem der Ansprüche 1 - 8, im Lagerhaltungs- und Trans-

7

portwesen,

dadurch gekennzeichnet,

daß im Informationsträger (1) Versandziele von Versandgut, insbesondere Gepäckstücken oder Containern, einprogrammiert sind, wobei ein mit dem Informationsträger (1) zusammenwirkendes Gerät über eine Anzeigevorrichtung anzeigt, wohin das gekennzeichnete Versandgut hingeschickt werden soll, oder mit peripheren elektronischen Elementen zur Steuerung von Förderbändern oder dergleichen zusammenmenwirkt.

## Claims

1. A system of data acquisition and storage, consisting of a data carrier (1) which is constructed as a perforable card, and a data processing unit (3) with a scanning device (2) for reading the data applied to the card via the perforation into the data processing unit in order to deliver a time-controlled alarm signal and/or for controlling further units on the downstream side of the unit, characterised by the following features:

   disposed on the data carrier (1) are a plurality of separable conductor paths (1) which
   - extend over preferably marked zones (11, 11') of the data carrier (1) which are provided for perforation of the data carrier (1) and thus separation of the conductor paths (10) and
   - are extended to a marginal portion (13) of the data carrier (1)
   - the scanning device (2) consists of a plurality of scanning contacts (15) for impinging on the end portions of the conductor paths (10) of the data carrier (1), which are disposed in a housing (17) for the spatially defined insertion or supporting of the marginal portion (13) of the data carrier (1)

2. A system according to claim 1, characterised in that the data carrier (1) is held by force fitting in the housing (17) which is constructed as a push-in slot.

3. A system according to claim 1 or 2, characterised in that the conductor paths (10) are applied to the data carriers (1) by evaporation, printing, spraying or adhesion.

4. A system according to one of the preceding claims, characterised in that the data carrier material is paper or card.

5. A system according to one of the preceding claims, characterised in that the thickness of the material in the separable zones (11, 11') provided for perforation is thinner than the average thickness of the material of the data carrier (1) around the zones (11, 11').

6. A system according to one of the preceding claims, characterised in that the zones (11, 11') which are provided for perforation are provided with a marginal perforation or preliminary stamping (18).

7. A system according to one of the preceding claims, characterised in that for the simultaneous perforation of a plurality of perforable zones (11, 11') a programming stamp (19) is provided which carries on its under side (20) a plurality of perforating pins (21), the number and disposition of which are attuned to the disposition of the perforable zones (11, 11a) on the data carrier or reflect a specific programme content.

8. A system according to claim 7, characterised in that the perforation pins can be inserted into recesses (22) in the programming stamp (19).

9. A system according to one of the preceding claims, characterised in that the programme carrier (1) is permanently and rigidly clamped in a corresponding recess in a housing in an electronic alarm clock, its perforated zone projecting visibly from the housing.

10. A system according to one of the preceding claims, characterised in that the zones (11) which are, perforable in keeping with specific time intervals are disposed in a circle on the data carrier (1), after the fashion of a dial.

11. A system according to claim 10, characterised in that in addition to the circularly disposed zones (11 ) further perforable zones (11') are provided which correspond to intermediate intervals or longer term time intervals (in relation to the time intervals of the circular zones (11).

12. A system according to one of claims 1 to 3, characterised in that an electronic alarm transmitter is controllable and is disposed on a frozen goods container so that the frozen goods can be monitored by means of the data carrier (1).

13. Use of the system according to one of claims 1 to 8 in electronically actuable locking systems, characterised in that the data carrier (1) is constructed as a key card for electronic door locks.

14. Use of the system according to one of claims 1 to 8 in warehousing and transportation, characterised in that destinations of despatched goods, particularly packages or containers, are programmed into the data carrier (1), a unit co-operating with the data carrier (1) indicating via a display device the destination to which the identified consignment is to be despatched, or co-operating with peripheral electronic elements for the control of conveyor belts or the like.

**Revendications**

1. Système de saisie et de mémorisation de données, comprenant un support d'informations (1) réalisé sous la forme d'une carte perforable, ainsi qu'un appareil (3) de traitement de données qui est muni d'un dispositif d'exploration (2) pour mettre en mémoire, dans l'appareil de traitement de données, les données portées sur la carte par l'intermédiaire de la perforation, en vue de délivrer un signal d'alarme à commande temporelle et/ou de commander d'autres appareils branchés en aval dudit appareil,
   caractérisé par les particularités suivantes :
   - le support d'informations (1) présente une pluralité de pistes conductrices séparables (10), qui
     -- s'étendent par des régions (11, 11') du support d'informations qui sont de préférence marquées et sont destinées à la perforation dudit support d'informations (1), et donc à la séparation des pistes conductrices (10), et
     -- gagnent une zone marginale (13) du support d'informations (1),
   - le dispositif d'exploration (2) se compose d'une pluralité de contacts d'exploration (15) conçus pour agir sur les tronçons extrêmes des pistes conductrices (10) du support d'informations (1), et disposés dans un logement (17) en vue de l'insertion ou de la retenue, bien définie dans l'espace, de la zone marginale (13) du support d'informations (1).

2. Système selon la revendication 1,
   caractérisé par le fait
   que le support d'informations (1) est retenu, avec assise par coincement, dans le logement (17) réalisé sous la forme d'une fente d'enfichage.

3. Système selon la revendication 1 ou 2,
   caractérisé par le fait
   que les pistes conductrices (10) sont métallisées sous vide, ou bien déposées par impression, par pulvérisation ou par collage sur les supports d'informations (1).

4. Système selon l'une des revendications précédentes,
   caractérisé par le fait
   que le matériau du support d'informations est du papier ou du carton.

5. Système selon l'une des revendications précédentes,
   caractérisé par le fait
   que l'épaisseur du matériau des régions séparables (11, 11'), destinées à la perforation, est conçue moindre que l'épaisseur de matériau moyenne du support d'informations (1), qui entoure lesdites régions (11, 11').

6. Système selon l'une des revendications précédentes,
   caractérisé par le fait
   que les régions (11, 11') destinées à la perforation sont munies d'une perforation marginale ou d'une découpe préalable (18).

7. Système selon l'une des revendications précédentes,
   caractérisé par le fait
   qu un poinçon de programmation (19), prévu pour perforer simultanément une pluralité de régions perforables (11, 11'), porte à sa face inférieure (20) une pluralité de pointes perforatrices (21) dont le nombre et la disposition coïncident avec la disposition des régions perforables (11, 11') sur le support d'informations, ou reproduisent respectivement le contenu d'un programme déterminé.

8. Système selon la revendication 7,
   caractérisé par le fait
   que les pointes perforatrices peuvent être engagées dans des évidements (22) du poinçon de programmation (19).

9. Système selon l'une des revendications précédentes,
   caractérisé par le fait
   que le support de programmes (1) peut être bloqué durablement dans une échancrure correspondante du boîtier d'une horloge électronique, et fait saillie de manière visible hors dudit boîtier, par sa région perforée.

10. Système selon l'une des revendications précédentes,
    caractérisé par le fait
    que les régions perforables (11), correspondant à des intervalles de temps déterminés, sont agencées circulairement sur le support d'informations (1), à la manière d'un cadran.

11. Système selon la revendication 10,
    caractérisé par le fait
    que d'autres régions perforables (11'), prévues à côté des régions (11) agencées circulairement, correspondent à des périodes intercalaires ou à des intervalles de temps à délai prolongé [par rapport aux intervalles de temps des régions circulaires (11)].

12. Système selon l'une des revendications 1-8,
    caractérisé par le fait
    qu'une alarme électronique, installée sur un réceptacle de produits surgelés, peut être commandée au moyen du support d'informations (1) en vue de la surveillance de produits surgelés.

13. Utilisation du système selon l'une des revendications 1-8, dans des installations de fermeture actionnables électroniquement,
    caractérisée par le fait
    que le support d'informations (1) est réalisé sous la forme d'une carte codée pour serrures électroniques de portes.

14. Utilisation du système selon l'une des revendications 1-8, dans le domaine du stockage et du transport,
    caractérisée par le fait
    que des destinations d'objets à expédier, en particulier des bagages ou des conteneurs, sont programmées dans le support d'informations (1), un appareil associé audit support d'informations (1) affichant, par l'intermédiaire d'un dispositif d'affichage, l'adresse à laquelle l'objet à expédier repéré doit être envoyé, ou bien coopérant avec des éléments électroniques périphériques, en vue de la commande de bandes convoyeuses ou dispositifs similaires.

FIG.4

FIG.3

FIG.2

FIG.1

FIG.5